# EUROPEAN PATENT APPLICATION

(11) **EP 3 378 904 A1**
(43) Date of publication of application: **26.09.2018**
(21) Application number: 18163168.0
(22) Date of filing: 21.03.2018
(51) Int. Cl.: C09D 5/00, B05D 7/00, C09D 5/08, C09D 5/10, C09D 163/00, C09D 7/61, C09D 7/40

(54) **CORROSION PROTECTION VIA NANOMATERIALS**

(30) Priority: 22.03.2017 US 201715466491
(71) Applicant: Hamilton Sundstrand Corporation, Charlotte, NC 28217 (US)
(72) Inventor: POTEET, Steven, Hamden, CT Connecticut 06518 (US)
(74) Representative: Dehns

(57) **Abstract**

A method for increasing corrosion resistance of metallic substrates without use of hexavalent chromium includes chemically treating the substrate to create an oxide layer, mixing nanoclay particles into a primer (e.g. a non-chromate primer), applying the primer to the oxide layer of the substrate, and applying a topcoat to the primer opposite the oxide layer.

## Description

### CROSS-REFERENCE TO RELATED APPLICATION(S)

This application is related to the following co-pending application that is filed on even date herewith and is assigned to the same assignee: CORROSION PROTECTION VIA NANOMATERIALS, Serial No. 15,466,505.

### BACKGROUND

This application is related generally to corrosion protection coatings, and specifically to non-chromium corrosion protection coatings.

Chromium based anti-corrosion coatings are used to protect metals such as aluminum, copper, cadmium, zinc, magnesium, tin, silver, iron, and their alloys to reduce and slow corrosion of the metal. Anti-corrosion coatings can be applied to everyday items such as tools or hardware to prevent corrosion, and to aerospace and commercial equipment with high requirements for corrosion durability. Traditionally, chromic acid was used to create these coatings. However, chromic acid contains high levels of hexavalent chromium.

Hexavalent chromium is now known to be a dangerous toxin and a known carcinogen. Chronic inhalation of hexavalent chromium increases risk of lung cancer among other health complications. The presence of hexavalent chromium in drinking water has created substantial health risks as well. For this reason, hexavalent chromium is heavily regulated in both the U.S. and abroad. In 2017, the EU will ban hexavalent chromium for many applications unless an authorization for a specific application or use has been granted. Thus, industry has been actively trying to find a substitute for hexavalent chromium based conversion coatings and anodizing processes, whereby an active chromated-based epoxy primer is then applied to provide additional protection from corrosion.

Non-chromium based anti-corrosion coatings and primers lack the strength of chromium-based alternatives and allow for quicker corrosion of an underlying metallic substrate. It is well known that chromates possess the unique property of solubilizing and providing active corrosion inhibition at areas that have been depleted (such as scratches or abrasions on coatings). In particular, non-chromium epoxy-based primers found in the art do not provide sufficient protection of damaged coating areas in the absence of a chromated pre-treatment for metallic substrates.

### SUMMARY

An article includes a substrate, an oxide layer on the substrate, a primer attached to the oxide layer opposite the substrate, the primer containing nanoclay particles, and a topcoat attached to the primer opposite the oxide layer.

A method of making a corrosion resistant coating includes forming an oxide layer on a surface of a metallic substrate, applying a primer with nanoclay particles to the oxide layer of the metallic substrate, and applying a topcoat to the primer opposite the metallic substrate.

### BRIEF DESCRIPTION OF THE DRAWINGS

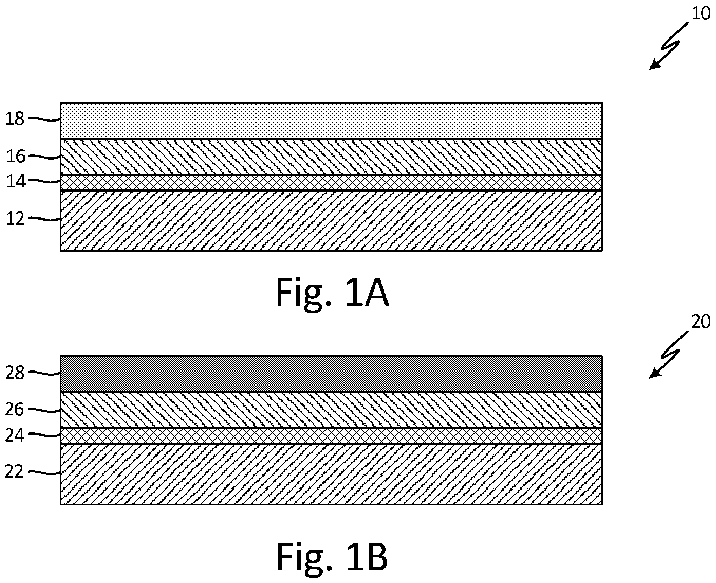

FIG. 1A is a schematic drawing of a corrosion protection coating on a substrate.
FIG. 1B is a schematic drawing of a second corrosion protection coating on a substrate.

### DETAILED DESCRIPTION

Non-chromate corrosion protection of metallic substrates is necessary as hexavalent chromium is phased out. Current non-chromate corrosion protection methods lack the effectiveness of traditional hexavalent chromium versions. However, the use of nanoclays in conjunction with non-chromate corrosion inhibitors can create corrosion-resistant articles that have long lifespans and are protected even when protective coatings on substrates are damaged.

FIG. 1A is a schematic drawing of an article including a corrosion protection coating on a substrate. Article 10 includes substrate 12, oxide layer 14, protection coating 16, and topcoat 18.

Substrate 12 can be metallic or an alloy, including aluminum alloys in the 2000 series, 6000 series and 7000 series, cold-rolled or stainless steels, or zinc-nickel alloys. Substrate 12 is a part that must be protected from corrosion. Substrate 12 is anodized prior to application of protection coating 16, thus, substrate 12 hosts oxide layer 14. Oxide layer 14 is created on an outer surface of substrate 12 through standard anodizing methods, such as application of an acid such as sulfuric acid or phosphoric acid followed by a sealing process. Alternatively, oxide layer 14 may be a conversion coat, such as a chromate or trivalent chromium conversion coating; for instance, a standard Alodine ® 600 conversion coating could be used.

Protection coating 16 is an epoxy-based primer containing one or more non-chromate corrosion inhibitors mixed with a nanomaterial filler. The non-chromate corrosion inhibitor can be compounds containing praseodymium, manganese, silane, aluminum, zinc, lanthanide, cerium, yttrium, or a rare earth metal depending on the anti-corrosion needs.

The nanomaterial filler in protection coating 16 are 2-D lamellar nanoclays, such as bentonite or Laponite ® RD. An organo-modified montmorillonite clay (MMT) can be used as a nanomaterial filler in a topcoat. Bentonite is a naturally occurring lamellar platelet, and in this instance that has a diameter of less than 25 micrometers and is on average 1-4 nm in height. Laponite ® RD is a synthetic hectorite comprised of silicic acid, lithium magnesium and sodium salt, and is also a platelet. Laponite ® RD platelets are between 1 and 4 nanometers in height, and are approximately 30 nanometers in diameter.

Nanoclays have the ability to act as a physical barrier to prevent corrosion by creating a tortuous pathway for corrosive ions and gases, as well as moisture. These nanoclays are two dimensional nanomaterials that act as sheet barriers within protection coating 16. The larger surface areas of the nanoclays help protect substrate 12 from moisture, gases and ions that could corrode the surface of substrate 12.

Additionally, nanoclays may sequester non-chromate corrosion inhibitor ions and promote ion exchange with non-chromate corrosion inhibitors. These properties create additional corrosion resistance for substrate 12, and particularly guard against corrosion at sites of damage to the protection coating. Specifically, nanoclay particles may sequester corrosion inhibitors near a site of substrate exposure to the environment, slowing corrosion at that site. For instance, a test of bentonite filled primer with 1.5 wt% bentonite solution showed visible protection along damaged areas of the protection coating on a substrate after 2,000 hours of ASTM B117 testing compared to an epoxy-based primer without nanoclays. Similarly, in the same test but using a Laponite ® RD filled primer, 0.75 wt% Laponite ® RD solution sufficiently protected a damaged area of a protective coating on a metallic substrate from salt exposure.

Finally, nanoclays such as bentonite and Laponite ® RD have shown the ability to increase hydrophobicity of a substrate, further protecting the substrate from corrosion. When Laponite ® RD or bentonite was used, the contact angle on the surface of substrate 12 was increased by 22 to 24 degrees compared to a primer without nanoclays. The higher contact angle created a more hydrophobic environment on the surface of substrate 12, preventing water contact. Overall, if moisture and oxygen permeability kinetics are slowed through protection coating 16, the lifetime of non-chromated substrate 12 increases.

Protection coating 16 is prepared by mixing the nanoclay particles (Laponite ® RD or bentonite) into the epoxy-based primer as the primer is assembled from its components. An epoxy-based primer mix typically contains a base component, a catalyst component, and a thinner component such as water. For example, this mixture can be a solvent, pre-polymers that will make a BPA (bisphenol-A-(epichlorhydrin)), rheological modifiers, and pigments. First, the nanoclays are dispersed in water through sonication at 20-40 kHz. Next, the base and catalyst components of the primer are added to the resulting solution. Subsequently, the mixture is high shear mixed at 3000-5000 RPM until homogeneous. The primer layer is then applied to oxide layer 14 of metallic substrate 12 by spraying a layer of the primer mixture between 0.0005 inches and 0.002.0 inches thick.

Topcoat 18 can be a polyurethane based layer which can act as a sealant, gloss, or UV protectant among other things. Topcoat 18 in FIG. 1A is applied on top of protection coating 16 opposite substrate 12 for both extra protection and aesthetic appeal.

FIG. 1B is a schematic drawing of another article including a corrosion protection coating on a substrate. Article 20 includes substrate 22, oxide layer 24, protection coating 26, and filled topcoat 28. Substrate 22, oxide layer 24, and protection coating 26 are similar to their counterparts in FIG. 1A. They are made and assembled in the same way as described in reference to FIG. 1A.

Topcoat 28 is similar to topcoat 18 of FIG. 1A, but topcoat 28 contains nanoclay particles (MMT) that provide additional corrosion protection to substrate 22. Dispersion of nanoclays into topcoat 28 is similar to the process used to mix nanoclays into the primer of protection coating 26. First, the MMT nanoclay particles are dispersed in either an organic thinner (such as a thinner containing xylenes, ethylbenzene, toluene, nitroethane, and alcohols or similar), or an organic solvent (such as toluene, n-methyl-2-pyrrolidone, dimethylformamide, dimethylacetamide, dimethylamine, or dimethylsulfoxide). The nanoclay particles are sonicated at 20-40 kHz for 5-20 minutes into the thinner or solvent. Next, the resulting solution is blended into a base component of the topcoat via high shear mixing at 3000-8000 RPM until homogenous. Subsequently, the activator component (a catalyst) is added as required.

Topcoat 28 is different from topcoat 18 in FIG. 1A. Topcoat 28 allows for further corrosion protection, similar to protection layer 26. The use of nanoclay particle in topcoat 28 allows for a physical barrier of nanomaterials, potential sequestering of non-chromate corrosion inhibitors, and increased hydrophobicity. In a test of a topcoat filled with MMT particles exposed to 1,500 hours of salt spray, a topcoat with 10% MMT sufficiently protected a damaged surface portion of a metallic substrate.

Additionally, a topcoat filled with nanomaterials allows for less degradation of the topcoat's barrier properties over time. Testing of a topcoat filled with 5-10 wt% MMT particles showed the barrier properties of the filled topcoat were an order of magnitude better than topcoats without nanoclays.

The use of nanoclays in epoxy-based primers with non-chromate corrosion inhibitors to increase corrosion resistance and protect against surface damage allows a transition away from hexavalent-chromium methods of corrosion protection. The use of nanoclays in non-chromate primers is also lightweight and cost-effective. This additionally allows the transition to non-chromate corrosion protection while using low process conditions, such as sonication and high shear mixing to effectively exfoliate the nanomaterials.

### Discussion of Possible Embodiments

The following are non-exclusive descriptions of possible embodiments of the present invention.

An article includes a substrate, an oxide layer on the substrate, a primer attached to the oxide layer opposite the substrate, the primer containing nanoclay particles, and a topcoat attached to the primer opposite the oxide layer.

The article of the preceding paragraph can optionally include, additionally and/or alternatively, any one or more of the following features, configurations and/or additional components:

The substrate is selected from the group consisting of aluminum, steel, zinc, nickel, and alloys thereof.

The primer comprises a non-chromate corrosion inhibitor.

The non-chromate corrosion inhibitor is selected from the group consisting of a lanthanide, a silane, praseodymium, manganese, zinc, aluminum, cerium, or yttrium ions, and ionic compounds thereof.

The primer is comprised of a base component, a catalyst component, and a thinner.

The nanoclay particles are selected from the group consisting of bentonite, a synthetic hectorite, organo-modified montmorillonite and combinations thereof.

The nanoclay particles have average diameters of less than 30 nanometers.

The nanoclay particles have average heights between 1 and 4 nanometers.

The topcoat comprises nanoclay particles.

A method of making a corrosion resistant coating includes forming an oxide layer on a surface of a metallic substrate, applying a primer with nanoclay particles to the oxide layer of the metallic substrate, and applying a topcoat to the primer opposite the metallic substrate.

The method of the preceding paragraph can optionally include, additionally and/or alternatively, any one or more of the following features, configurations and/or additional components:

The primer with nanoclay particles is prepared by dispersing nanoclay particles in water to create a dispersion, adding an epoxy-based primer base component to the dispersion, mixing the dispersion such that the dispersion is homogeneous, and mixing a primer catalyst component into the dispersion.

The nanoclay particles are selected from the group consisting of bentonite, a synthetic hectorite, montmorillonite and combinations thereof.

Forming an oxide layer on a surface of a metallic substrate includes anodizing the substrate.

Forming an oxide layer on a surface of a metallic substrate includes applying sulfuric acid, chromic acid, or phosphoric acid to the substrate, and applying a sealant.

Forming an oxide layer on a surface of a metallic substrate includes applying a conversion coating to the substrate.

Applying the primer comprises spraying a layer of primer between 0.0005 inches and 0.002 inches thick onto the oxide layer.

The topcoat contains nanoclay particles.

The topcoat is prepared by dispersing nanoclay particles in an organic thinner to create a dispersion, mixing the dispersion such that the dispersion is homogeneous, mixing a base component into the dispersion, and adding an activator to the dispersion.

The organic thinner is selected from the group consisting of xylenes, ethylbenzenes, toluene, and n-methyl-2-pyrrolidone.

The metallic substrate is selected from the group consisting of aluminum 2000, aluminum 6000, and aluminum 7000.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An article comprising:
a substrate;
an oxide layer on the substrate;
a primer attached to the oxide layer opposite the substrate, the primer containing nanoclay particles; and
a topcoat attached to the primer opposite the oxide layer.

2. The article of claim 1, wherein the substrate is selected from the group consisting of aluminum, steel, zinc, nickel, and alloys thereof.

3. The article of claim 1 or claim 2, wherein the primer comprises a non-chromate corrosion inhibitor, preferably wherein the non-chromate corrosion inhibitor is selected from the group consisting of a lanthanide, a silane, praseodymium, manganese, zinc, aluminum, cerium, or yttrium ions, and ionic compounds thereof.

4. The article of any one of claims 1 to 3, wherein the primer is comprised of a base component, a catalyst component, and a thinner.

5. The article of any one of claims 1 to 4, wherein the nanoclay particles are selected from the group consisting of bentonite, a synthetic hectorite, organo-modified montmorillonite and combinations thereof.

6. The article of any one of claims 1 to 5, wherein the nanoclay particles have average diameters of less than 30 nanometers, and/or wherein the nanoclay particles have average heights between 1 and 4 nanometers.

7. The article of any one of claims 1 to 6, wherein the topcoat comprises nanoclay particles.

8. A method of making a corrosion resistant coating comprising:
forming an oxide layer on a surface of a metallic substrate;
applying a primer with nanoclay particles to the oxide layer of the metallic substrate; and
applying a topcoat to the primer opposite the metallic substrate.

9. The method of claim 8, wherein the primer with nanoclay particles is prepared by:
dispersing nanoclay particles in water to create a dispersion;
adding an epoxy-based primer base component to the dispersion;
mixing the dispersion such that the dispersion is homogeneous; and
mixing a primer catalyst component into the dispersion.

10. The method of claim 8 or claim 9, wherein the nanoclay particles are selected from the group consisting of bentonite, a synthetic hectorite, montmorillonite and combinations thereof.

11. The method of any one of claims 8 to 10, wherein forming an oxide layer on a surface of a metallic substrate comprises anodizing the substrate, and/or wherein forming an oxide layer on a surface of a metallic substrate comprises:
applying sulfuric acid, chromic acid, or phosphoric acid to the substrate; and
applying a sealant.

12. The method of any one of claims 8 to 11, wherein forming an oxide layer on a surface of a metallic substrate comprises applying a conversion coating to the substrate.

13. The method of any one of claims 8 to 12, wherein applying the primer comprises spraying a layer of primer between 0.0005 inches and 0.002 inches thick onto the oxide layer.

14. The method of any one of claims 8 to 13, wherein the topcoat contains nanoclay particles, preferably wherein the topcoat is prepared by:
dispersing nanoclay particles in an organic thinner to create a dispersion;
mixing the dispersion such that the dispersion is homogeneous;
mixing a base component into the dispersion; and
adding an activator to the dispersion, more preferably wherein the organic thinner is selected from the group consisting of xylenes, ethylbenzenes, toluene, and n-methyl-2-pyrrolidone.

15. The method of any one of claims 8 to 14, wherein the metallic substrate is selected from the group consisting of aluminum 2000, aluminum 6000, and aluminum 7000.
